**Europäisches Patentamt**

**European Patent Office**

**Office européen des brevets**

(19)

(11) Veröffentlichungsnummer : **0 152 760**
**B1**

(12) **EUROPÄISCHE PATENTSCHRIFT**

(45) Veröffentlichungstag der Patentschrift :
17.05.89

(21) Anmeldenummer : 85100366.5

(22) Anmeldetag : 16.01.85

(51) Int. Cl.⁴ : **C 08 L 61/34, C 08 G 16/02,**
**C 09 D 5/34**

(54) Säurehärtbare Mischung für schwindungsarme Furankitte und Verfahren zu deren Herstellung.

(30) Priorität : 25.01.84 DE 3402359

(43) Veröffentlichungstag der Anmeldung :
28.08.85 Patentblatt 85/35

(45) Bekanntmachung des Hinweises auf die Patenterteilung : 17.05.89 Patentblatt 89/20

(84) Benannte Vertragsstaaten :
AT BE CH DE FR GB IT LI NL SE

(56) Entgegenhaltungen :
EP--A-- 0 021 409
FR--A-- 1 025 930

(73) Patentinhaber : HOECHST AKTIENGESELLSCHAFT
Postfach 80 03 20
D-6230 Frankfurt am Main 80 (DE)

(72) Erfinder : Hesse, Wolfgang Dr.
Rossbachhöhe 42
D-6204 Taunusstein (DE)
Erfinder : Rauhut, Klaus. Dr.
Pfingstbornstrasse 13
D-6200 Wiesbaden (DE)

**Beschreibung**

Die Erfindung bezieht sich auf säurehärtende Mischungen für schwindungsarme Kitte, die als Bindemittel Furanharze enthalten.

Aus der DE-OS 2.926.053 sind schwindungsarme, säurehärtende Mischungen für Kitte bekannt, die als Bindemittel ein Reaktionsprodukt von Furfurylalkohol mit einem Hydroxymethylgruppen enthaltenden Resol auf der Basis von bifunktionellen Alkyl- oder Aralkylphenolen mit 3 bis 20 C-Atomen im Alkylrest enthalten, gegebenenfalls im Gemisch mit einem untergeordneten Anteil an unsubstituiertem Phenol oder Diphenolpropan, wobei im substituierten Resol mindestens 75 % der reaktiven H-Atome des Kerns durch Reaktion mit Formaldehyd substituiert sind und pro Hydroxymethylgruppe mehr als 0,5 Mol Furfurylalkohol umgesetzt worden sind, und wobei das Reaktionsprodukt in mindestens einem reaktiven Verdünner aus der Gruppe Benzylalohol, niedermolekulare Epoxydverbindungen, Furfurol, Difuryläther, Furfurylalkohol gelöst ist. Die nach dieser Lehre erhaltenen Harze stellen wertvolle Bindemittel für Kitte dar, weisen jedoch eine gewisse Empfindlichkeit gegenüber einigen aggressiven, organischen Lösemitteln auf, die in der Praxis für eine Anzahl von Fällen Bedeutung haben, wie Ketone, chlorierte und aromatische Kohlenwasserstoffe, sowie Ester.

Aus der DE-OS 3.028.974 ist ferner bekannt, aus einer Phenolverbindung, einem Aldehyd und Furfurylalkohol Harze zu erhalten, die unter im wesentlichen wasserfreien Bedingungen in Gegenwart eines Metallkatalysators hergestellt wurden. Diese Harze, die sich zur Herstellung von Gießereikernen und Gießereiformen eignen, sind aber für die Herstellung von Kitten nicht brauchbar, weil sie unter den in der Kittechnologie üblichen Bedingungen nicht vernetzen.

Gegenstand der Erfindung ist eine säurehärtbare Mischung für schwindungsarme Kitte auf der Basis eines Reaktionsproduktes von Furfurylalkohol mit einem mindestens 0,5 Hydroxymethylgruppen pro phenolisches Hydroxyl tragenden Resol, dadurch gekennzeichnet, daß sie

A) als Bindemittel das Reaktionsprodukt von Furfurylalkohol und dem Resol auf der Basis a) mindestens eines trifunktionellen Phenols oder einer Mischung dieses Phenols a) mit b) Alkyl- und/oder Aralkylphenolen, jeweils mit 3 bis 20 C-Atomen im Alkylrest, oder Arylphenol, mit einem Anteil bis zu 60 Mol.-% der substituierten Phenole b) bezogen auf die Summe der Phenole a) und b), wobei pro Hydroxymethylgruppe mehr als 0,4 Mol Furfurylalkohl umgesetzt worden sind, und

B) mindestens einen reaktiven Verdünner in einem Gewichtsverhältnis zum Harz A) von (0,4 bis 1,5) : 1 enthält.

Nach einer Ausführung der Erfindung ist vorgesehen, daß die Mischung aus A) und B) außerdem noch

C) mindestens eine Füllstoff, und

D) mindestens einen Härter enthält, wobei das Gewichtsverhältnis zwischen der Summe der Komponenten A) und B) zu der der Komponente C) und D) 1 : (1 bis 7), vorzugsweise 1 : (1,5 bis 5) beträgt.

Die erfindungsgemäß hergestellten Mischungen für Kitte zeigen sehr vorteilhafte Eingenschaften in Bezug auf Lagerbeständigkeit, chemische Beständigkeit und Temperaturbeständigkeit der Härtungsprodukte. Außerdem sind die Kitte sehr schwindungsarm und zeigen bei der Messung der Nachschwindung in Anlehnung an ASTM C 358 niedrigere Werte im Vergleich gegenüber den Kitten aus der DE-PS 2.926.053, die ihrerseits schon sehr schwindungsarm sind. Außerdem weisen sie bei guter Gebrauchsdauer eine verkürzte Härtungszeit auf und sind trotzdem gegen Chemikalien außerordentlich beständig. Besonders hervorzuheben ist die verbesserte Beständigkeit gegenüber aggressiven Lösungsmitteln wie Aceton, Chloroform, Toluol, Butylacetat und anderen mehr.

Als trifunktionelle Phenole, jeweils einzeln oder im Gemisch, können m-Kresol, m-Äthylphenol oder 3,5-Dimethylphenol verwendet werden, bevorzugt ist aber die Verwendung von unsubstituiertem Phenol.

Die gegebenenfalls mitverwendeten Alkylphenole in dem Alkylphenolresol sind bifunktionell. Es können para- oder ortho-Monoalkylphenole wie o-Propyl-, o-Isopropyl-, o-n-Butyl-, o-sek.- oder tert.-Butyl-, o-Isononyl-, p-n- oder tert.-Butyl-, p-n-Hexyl-, p-Cyclohexyl-, p-Isooctyl-, p-Isononyl- und p-Isododecylphenol, ferner Arylphenole, wie o- oder p-Phenylphenol, bevorzugt aber Aralkylphenole, wie die o- und p-Substitutionsprodukte von Styrol oder andern Vinylaromaten, wie α-Methylstyrol, Vinyltoluol, mit Phenol, jeweils einzeln oder im Gemisch Verwendet werden. Die Alkylreste können geradkettig, verzweigt oder cyclisch sein une 3 bis 20, vorzugsweise 4 bis 12 C-Atome enthalten. Die Phenolkomponente kann auch untergeordnete Mengen höheralkylierter Phenole enthalten, wie Di- und/oder Trialkylphenole (soweit diese noch wenigstens eine für die Reaktion mit Formaldehyd verfügbare Stelle enthalten) oder mehrwertige Phenole, z. B. Diphenylolpropan, und zwar in einem Anteil von bis zu 30 Mol.-%. Es können solche Alkylphenole, z. B. auch als Gemische, verwendet werden, wie sie bei der Alkylierung von Phenol mit ungesättigten Verbindungen, z. B. Alkylenen mit 3 bis 20 C-Atomen anfallen.

Diese substituierten bifunktionellen Phenole werden vorzugsweise im Gemisch mit unsubstituiertem Phenol eingesetzt, wobei der Gehalt der substituierten Phenole bis zu 60 Mol-% betragen kann und das Optimum der erzielbaren Eingenschaften bei Gehalten an substituierten Phenolen von 20 bis 60, vorzugsweise 30 bis 55 Mol-% liegt.

Im Rahmen der Erfindung liegt auch ein Verfahren zur Herstellung der erfindungsgemäßen Mischungen für Kitte, das dadurch gekennzeichnet ist, daß Furfurylalkohol mit einem mindestens 0,5 Hydroxymethylgruppen pro phenolisches Hydroxyl enthaltenden Resol auf der Basis mindestens eines trifunktionellen Phenols, oder einer Mischung dieses Phenols a) mit b), Alkyl- und/oder Aralkylphenolen, jeweils mit 3 bis 20 C-Atomen im Alkylrest, oder Arylphenol, mit einem Anteil bis zu 60 Mol-% der substituierten Phenole b), bezogen auf die Summe der Phenole a) und b), bei erhöhter Temperatur umgesetzt wobei mehr als 0,4 Mol des Furfurylalkohols pro Hydroxymethylgruppe zur Reaktion gebracht werden, das Reaktionsprodukt in einem reaktiven Verdünner in einem Gewichtsverhältnis zum Harz A von (0,4 bis 1,5) : 1, gelöst und diese Lösung, vorzugsweise unmittelbar vor der Anwendung, mit einem Füllstoff und einem Härter vermischt wird, wobei das Gewichtsverhältnis der Komponenten A) und B) zu dem der Komponenten C) und D) 1 : (1 bis 7), vorzugsweise 1 : (1,5 bis 5), beträgt.

Die Harzlösung A) und B) hat im allgemeinen einen Festharzanteil von 30 bis 80, vorzugsweise aber 45 bis 65 Gew.-%.

Die modifizierten Furanharze A) werden in Lösung in üblichen reaktiven Verdünnungmitteln eingesetzt, wie in Benzylalkohol, niedermolekularen Epoxydverbindungen, wie Phenylglycidyläther, Diphenylolpropan-diglycidyläther, vor allem aber in Furanverbindungen wie Furfurol, Difuryläther, vorzugsweise jedoch in Furfurylalkoholen. Dieser kann z. B. von der Reaktion mit dem Resol her als überschüssige Komponente vorliegen. Die reaktiven Verdünner werden in einem Gewichtsverhältnis zum Harz A) von (0,4 bis 1,5) : 1, vorzugsweise (0,6 bis 1,1) : 1 eingesetzt.

Als Füllstoff können z. B. Gesteinsmehle, Schwerspat, Quarzmehl und vorzugsweise Koksmehl oder Graphitmehl, z. B. als Kunstgraphit verwendet werden.

Als Härter können a) Säuren, wie Schwefelsäure, Salzsäure, Phosphorsäure, Oxalsäure, Sulfonsäuren wie Amidosulfonsäure, Mono- und Disulfonsäuren von Benzol, Toluol, Xylol, ferner Naphthalindisulfonsäure und/oder b) säureabspaltende Substanzen, wie Sulfochloride der unter a) genannten Sulfonsäuren, z. B. Toluol- oder Benzol-Sulfochlorid, Alkylester dieser Sulfonsäuren oder saure Schwefelsäureester und/oder c) saure Salze der Schwefelsäure oder der Phosphorsäure, vorzugsweise deren Natriumsalze, jeweils einzeln oder im Gemisch verwendet werden. Ihr Anteil beträgt in der Regel 0,1 bis 3, vorzugsweise 0,2 bis 2,0 Äquivalent, bezogen auf phenolische Hydroxylgruppen.

Das als Ausgangsstoff dienende Hydroxymethylgruppen enthaltende Resol wird aus der Phenolharzkomponente und mehr als 0,5 Mole, vorzugsweise mehr als 1 Mol Formaldehyd pro Phenolgruppe unter Bedingungen hergestellt, die die Bildung höherer Kondensate weitgehend vermeiden. Im allgemeinen haben die zo erhaltenen furanmodifizierten Phenolharze eine Viskosität von 50 bis 10 000, vorzugsweise 200 bis 2 000 mPa · s/20 °C. Dabei sind mäßige Reaktionstemperaturen zwischen 20 und 80 °C, vorzugsweise zwischen 30 und 60 °C sowie eine relativ hohe Katalysatorkonzentration z. B. 5 bis 100, vorzugsweise 10 bis 50, insbesondere 15 bis 30 Äquivalent-%, jeweils bezogen auf die phenolischen OH-Gruppen zweckdienlich. Als Katalysatoren für diese Reaktion eignen sich z. B. Basen wie Alkalimetallhydroxyde, Erdalkalimetallhydroxyde, tertiäre Amine und quaternäre Ammoniumbasen. Nach der Kondensation wird der Katalysator z. B. mit organischen oder anorganischen Säuren neutralisiert und das entstehende Salz durch Auswaschen entfernt.

Die Temperaturbeständigkeit der Härtungsprodukte liegt bei etwa 300 °C. Bei der Umsetzung des Phenolharzes mit Furfurylalkohol soll die Reaktionstemperatur zweckmäßig möglichst niedrig gewählt werden. Die Reaktion erfolgt im allgemeinen bei erhöhter Temperatur, z. B. 100 bis 170 °C, vorzugsweise bis zu 150 °C unter gleichzeitiger Abführung von bei der Reaktion gebildetem Wasser. Sie setzt bei etwa 100 bis 120 °C ein. Die Entfernung des Wassers kann mit einer Destillationskolonne erfolgen, vorzugsweise wird das Wasser in Gegenwart eines Schleppmittels azeotrop abdestilliert. Als Schleppmittel können aromatische Kohlenwasserstoffe wie Toluol oder Xylol oder aliphatische Kohlenwasserstoffe oder andere, nicht mit Wasser mischbare Stoffe, z. B. dieselben, die als Lösemittel bei der Herstellung des Harzes dienen, verwendet werden. Bei der Verwendung von höhersiedenden Schleppmitteln ist es wichtig, die Reaktionstemperatur durch Anwendung von vermindertem Druck in den gewünschten Bereich zu senken. Nach einer anderen Ausführungsform kann die Umsetzung zwischen Furfurylalkohol und dem Resol auch in der Schmelze erfolgen, jedoch ist die Umsetzung in Lösemitteln bevorzugt.

Es ist möglich, der Umsetzung zu Hydroxymethyl-Verbindungen eine sauer katalysierte Reaktion der Phenole mit Formaldehyd zu Novolaken vorzuschalten, sofern nicht mehr als 0,7, vorzugsweise nicht mehr als 0,5 Mol Formaldehyd pro Mol der Phenole verwendet werden. Dann wäre der so gebildete Novolak in einer zweiten Stufe unter den vorgenannten Bedingungen mit weiterem Formaldehyd zum Resol umzusetzen.

Die erfindungsgemäße weitere Umsetzung kann vorzugsweise mit mehr als 0,8 Mol Furfurylalkohol, insbesondere aber auch in Gegenwart eines Furfurylalkoholüberschusses durchgeführt werden, d. h. daß mehr als 1 Mol Furfurylalkohol je Hydroxymethylgruppe eingesetzt wird. Der überschüssige Furfurylalkohol kann als reaktiver Verdünner im Harz verbleiben.

Die Mengenverhältnisse können so gewählt werden, daß der Furfurylalkoholüberschuß so groß ist, daß er nach der Umsetzung gegebenenfalls nach Entfernen des Schleppmittels, ausreicht, daß Harz hinreichend zu verdünnen. Es ist aber auch möglich, die reaktiven Lösemittel später zuzusetzen.

Die Lagerfähigkeit der Harzlösung und auch einer Mischung mit Füllstoffen allein ist praktisch unbegrenzt. Die Herstellung des Kittes erfolgt vorzugsweise unmittelbar vor der Anwendung durch Vermischen der Furanharzlösung mit dem Füllstoff und dem Katalysator bzw. deren Mischung bzw., wenn ein Gemisch von Harzlösung und Füllstoff eingesetzt wird, mit dem Katalysator und gegebenenfalls weiterem Füllstoff.

In den nachstehenden Beispielen sind T = Gewichtsteile und % = Gewichtsprozent.

Beispiele

1a) Herstellung des Harzes-(Styrolmodifiziertes Harz im Molverhältnis 1 Phenol : 0,4 Styrol : 1,7 Formaldehyd)

In einem Reaktionsgefäß, welches mit Rühreinrichtung, Thermometer, Dosiereinrichtung, Wasserabscheider, Rückflußkühler sowie Vorrichtung für Destillation unter vermindertem Druck, wurden 376 T Phenol aufgeschmolzen, mit 0,7 T konzentrierter Schwefelsäure versetzt und der Ansatz auf 100 °C erwärmt. Nach Maßgabe der exothermen Reaktion wurden 166 T Styrol zudosiert, wobei die Temperatur auf 140 °C anstieg. Nachdem alles Styrol zugegeben war, wurde noch eine Stunde bei 140 °C gehalten und dann der Ansatz auf 60 °C abgekühlt. Während der Abkühlung wurden 120 T Natronlauge (33 %ig) zugesetzt. Nach Erreichen einer Temperatur von 60 °C wurden nach Maßgabe der exothermen Reaktion innerhalb einer Stunde 162 T wäßrige Formaldehydlösung (37 %ig) sowie 158,4 T Paraformaldehyd (91 %ig) zugegeben und der Ansatz bei 60 °C umgesetzt, bis der Gehalt an freiem Formaldehyd 0,6 % betrug, was etwa 2 Stunden erforderte. Mit 189 T 25 %iger Schwefelsäure wurde auf einen pH-Wert von 5,4 eingestellt, 100 T Toluol untergerührt und anschließend die wäßrige Phase abgesaugt. Zu dem im Kolben verbliebenen Harz wurden 784 T Furfurylalkohol zugegeben und auf Umlaufdestillation geschaltet. Während der Umlaufdestillation stieg die Temperatur auf 135 bis 138 °C. Es trennten sich 255 ml einer wäßrigen Phase ab. Nach Abkühlung auf 110 °C wurde bei einem Druck von 100 mbar das Schleppmittel abdestilliert und der Ansatz anschließend mit 930 T Furfurylalkohol verdünnt. Die anfallende Furanharzlösung (2 000 Teile) besaß einen Rückstand von 50,2 % (eine Stunde/170 °C) und eine Viskosität von 1 025 mPa · s/20 °C.

1b) Herstellung des Kittes

Für die kittechnische Prüfung wurde aus 93 T Koksmehl, 2 T Oxalsäure, 1 T kristallisierter Phosphorsäure und 4 T Toluolsulfochlorid ein Kittmehl hergestellt, von dem 100 T mit 50 T der Harzlösung zu einem Kitt vermischt wurden. Der Kitt hatte eine Gebrauchsdauer von 30 Min. und erreichte nach 24 Stunden bei Raumtemperatur eine Shore-Härte D von 55. Nach 48 Stunden stieg die Shore-Härte auf 63 (s. Tabelle).

1c) Physikalische Prüfung

Für die Bestimmung der Beständigkeit gegen Lösemittel und Chemikalien wurden aus dem Kitt zylindrische Körper mit einer Höhe und einem Durchmesser von je 25 mm hergestellt und diese 8 Tage lang bei Raumtemperatur gelagert. Nach dieser Zeit waren die Prüfkörper beständig gegen kochende 70 %ige Schwefelsäure, kochende konzentrierte Salzsäure, gegen 130 °C heiße, konzentrierte Phosphorsäure, gegen konzentrierte und verdünnte Natronlauge und andere Alkalilösungen. Zur Prüfung der Beständigkeit gegen Lösemittel wurden Prüfkörper nach 8 Tagen Lagerung bei Raumtemperatur 5 × 8 Stunden in Aceton, Chloroform, Toluol, Butylacetat und in Wasser gekocht. Die Gewichtsänderungen der Prüfkörper sind aus der Tabelle ersichtlich.

Zur Messung der Nachschwindung in Anlehnung an ASTM C 358 wurden zylindrische Prüfkörper von 100 mm Länge und 25 mm Durchmesser 8 Tage lang bei Raumtemperatur gelagert und ihre Längenänderung gemessen. Nach 60 Tagen betrug die Längenänderung 0,192 9 % und nach 120 Tagen 0,207 %.

2a) Herstellung des Harzes — (Styrolmodifiziertes Harz im Molverhältnis 1 Phenol : 0,5 Styrol : 1,75 Formaldehyd)

Wie im Beispiel 1 wurden 376 T Phenol, 0,7 T konzentrierte Schwefelsäure, 208 T Styrol, 120 T Natronlauge (33 %ig), 162 T wäßrige Formaldehydlösung (37 %ig) und 164.8 T Paraformaldehyd (91 %ig) umgesetzt, mit 189 T 25 %iger Schwefelsäure neutralisiert, mit Toluol verdünnt, von der wäßrigen Phase befreit und mit 784 T Furfurylalkohol am Umlauf destilliert (wobei sich 210 ml Wasser abschieden), vom Schleppmittel befreit und mit 800 T Furfurylalkohol verdünnt. Es fielen 2 100 Teile einer 50,3 %igen Harzlösung (Rückstand 1 Stunde/170 °C) an, Viskosität 550 mPa · s/20 °C.

2b) Herstellung des Kittes

Für die kittechnische Prüfung wurden 50 T der Harzlösung mit 100 T des Kittmehles aus Beispiel 1 gemischt. Der Kitt hatte eine Gebrauchsdauer von 35 Minuten und entwickelte nach 24 Stunden bei Raumtemperatur eine Shore-Härte D von 35 ; nach 48 Stunden betrug die Shore-Härte D 58. Das Verhalten gegen Säuren und Laugen entsprach vollständig dem des Harzes aus Beispiel 1. Die Nachschwindung, die wie im Beispiel 1 gemessen wurde, betrug nach 60 Tagen 0,16 %, nach 120 Tagen 0,175 4 %. Die Beständigkeit gegenüber Lösemittel ist aus der Tabelle ersichtlich.

Vergleiche

Vergleich 1a) Herstellung des Harzes — (Styrolmodifiziertes Harz im Molverhältnis 1 Phenol : 1 Styrol : 1,625 Formaldehyd gemäß DE-PS 2.926.053)

Wie in Beispiel 1 wurde 376 T Phenol, 0,7 T konzentrierte Schwefelsäure, 416 T Styrol, 120 T Natronlauge (33 %ig), 162 T wäßrige Formaldehydlösung (37 %ig), 148 T Paraformaldehyd (91 %ig), miteinander umgesetzt. Nach 3 1/2 Stunden Reaktionszeit bei 60 °C betrug der Formaldehydgehalt 1,56 % ; die Reaktion wurde an dieser Stelle durch Zugabe von 189 T 25 %iger Schwefelsäure abgebrochen. Nach der Zugabe von 140 T Toluol wurde die wäßrige Phase abgetrennt, 784 T Furfurylalkohol zugegeben und wie im Beispiel 1 am Umlauf destilliert. Es schieden sich 200 ml wäßrige Phase ab. Nach dem Abdestillieren des Schleppmittels wurde mit 880 T Furfurylalkohol verdünnt. Ausbeute 2 150 T, Rückstand 50 % (1 Stunde/170 °C), Viskosität 340 mPa · s/20 °C.

Vergleich 1b) Herstellung des Kittes und physikalische Prüfung

Für die kittechnische Prüfung wurden 50 T der Harzlösung V 1a) und 100 T des Kittmehles aus Beispiel 1 gemischt. Der Kitt hatte eine Gebrauchsdauer von 70 Minuten und wies nach 24 Stunden eine Shore-Härte D von 5 auf. Nach 48 Stunden betrug die Shore-Härte D 45. Die Beständigkeit gegen Säuren und Laugen entsprach den Kitten, die mit den Harzlösungen aus Beispiel 1 und 2 erhalten wurden. Teilweise beachtliche Unterschiede ergaben sich bei der Prüfung der Lösemittelbeständigkeit, die wie oben durchgeführt wurde und deren Ergebnis in der Tabelle angegeben ist.

Vergleich 2a) — Herstellung des Harzes — (Styrolmodifiziertes Harz im Mol-Verhältnis 1 Phenol : 0,4 Styrol : 1,65 Formaldehyd in Anlehnung DE-OS 3.028.974)

188 T Phenol wurden in Gegenwart von 0,35 T konzentrierter Schwefelsäure mit 83 T Styrol wie im Beispiel 1 umgesetzt, auf 90 °C abgekühlt und bei dieser Temperatur mit 28,5 T einer Zinkoctoat-Lösung (in Testbenzin) mit einem Gehalt von 8 % Zink sowie mit 109 T Paraformaldehyd (91 %ig) versetzt und bei dieser Temperatur 18 Stunden gerührt, bis der Formaldehydgehalt 0 % betrug. Dann wurden 180 T Toluol und 392 T Furfurylalkohol zugegeben und bis zu einer Maximaltemperatur von 170 °C am Umlauf destiliert. Dabei schieden sich 78 ml einer wäßrigen Phase ab. Nach dem Abtreiben des Schleppmittels unter einem Druck von 100 bar wurde die Lösung mit 314 T Furfurylalkohol auf einen Rückstand von 49,5 % (1 Stunde/170 °C) eingestellt. Viskosität 130 mPa · s/20 °C, Ausbeute 1 005 g.

Vergleich 2b) Herstellung des Kittes und physikalische Prüfung

Für die kittechnische Prüfung wurde 50 T der Harzlösung V 2a) mit 100 T des Kittmehls aus Beispiel 1 gemischt. Erst nach 7 Tagen trat eine schwache Verfestigung der Kittmasse ein, die Shore-Härte D betrug auch zu diesem Zeitpunkt 0. Der Kitt vernetzte nicht.

Vergleich 3a) Herstellung des Harzes — (Styrolmodifiziertes Harz im Mol-Verhältnis 1 Phenol : 0,4 Styrol : 1,65 Formaldehyd gemäß DE-OS 3.028.974)

Der Vergleich 2 wurde mit nur 14,3 T Zinkoctoat wiederholt, um den eventuell schädlichen Einfluß des Zinkoctoates zu verringern. Nach 22 stündiger Reaktion bei 70 °C betrug der Formaldehydgehalt 1,7 %. Nach der Umsetzung mit Furfurylalkohol und Aufarbeitung wie im Vergleich 2 erhielt man nach dem Verdünnen auf 51,3 % 1 009 T einer Harzlösung mit einer Viskosität von 230 mPa · s/20 °C.

Vergleich 3b) Kittechnische Prüfung

Bei der kittechnischen Prüfung trat wie in Vergleich 2 auch nach 7 Tagen keine Vernetzung ein.

(Siehe Tabelle Seite 6 f.)

Tabelle

|  |  | | | Vergleiche | | |
| Beispiel | | 1 | 2 | 1 | 2 | 3 |
|---|---|---|---|---|---|---|
| Harzlösung | | 50 | 50 | 50 | 50 | 50 |
| Kittmehl | | 100 | 100 | 100 | 100 | 100 |
| Gebrauchsdauer (min) | | 30 | 35 | 70 | – | – |
| Shore-Härte D (24 h) | | 35 | 35 | 5 | – | – |
| (48 h) | | 63 | 58 | 45 | 0(7d) | 0(7d) |
| Beständigkeit gegen: | | | | | | |
| Säure | | + | + | + | – | – |
| Lauge | | + | + | + | – | – |
| Lösemittel: | Aceton | + 4,63 | + 4,78 | + 8,17 | – | – |
| (+=Gewichtszunahme | Chloroform | – 44,68 | –48,8 | –100 *) | – | – |
| –=Gewichtsabnahme | Toluol | – 0,6 | –0,31 | +0,932 | – | – |
| in %) | Butylacetat | – 1,52 | –1,08 | –1,75 | – | – |
| | Wasser | + 0,01 | +0,19 | +0,376 | – | – |
| Nachschwindung (%): | | 0,1929 | 0,16 | – | – | – |
| nach 60 d | | 0,207 | 0,1754 | – | – | – |
| 120 d | | | | | | |

*) völlig zerstört

EP 0 152 760 B1

## EP 0 152 760 B1

**Patentansprüche** (für die Vertragsstaaten : BE, CH, DE, FR, GB, IT, LI, NL, SE)

1. Säurehärtende Mischung für schwindungsarme Kitte auf der Basis eines Reaktionsproduktes von Furfurylalkohol mit einem mindestens 0,5 Hydroxymethylgruppen pro phenolisches Hydroxyl tragenden Resol, dadurch gekennzeichnet, daß sie

A) als Bindemittel das Reaktionsprodukt von Furfurylalkohol und dem Resol auf der Basis a) mindestens eines trifunktionellen Phenols oder einer Mischung dieses Phenols a) mit b) Alkyl- und/oder Aralkylphenolen, jeweils mit 3 bis 20 C-Atomen im Alkylrest, oder Arylphenol, mit einem Anteil bis zu 60 Mol-% der substituierten Phenole b), bezogen auf die Summe der Phenole a) und b), wobei pro Hydroxymethylgruppe mehr als 0,4 Mol Furfurylalkohl umgesetzt worden sind, und

B) mindestens einen reaktiven Verdünner in einem Gewichtsverhältnis zum Harz A) von (0,4 bis 1,5) : 1 enthält.

2. Mischung nach Anspruch 1, dadurch gekennzeichnet, daß sie außerdem noch

C) mindestens einen Füllstoff, und

D) mindestens einen Härter enthält, wobei das Gewichtsverhältnis zwischen der Summe der Komponenten A) und B) und der der Komponenten C) und D) 1 : (1 bis 7), vorzugsweise 1 : (1,5 bis 5) beträgt.

3. Mischung nach einem der beiden Ansprüche 1 oder 2, gekennzeichnet, durch wenigstens eines der Merkmale, daß der Alkylrest in den Alkyl- und/oder Aralkylphenolen 4 bis 12 C-Atome aufweist, daß das trifunktionelle Phenol Phenol selbst ist, daß pro Hydroxymethylgruppe mehr als 0,8 Mol Furfurylalkohol umgesetzt worden sind und daß der reaktive Verdünner eine Furanverbindung, vorzugsweise Furfurylalkohol ist.

4. Mischung nach einem oder mehreren der Ansprüche 1 bis 3, dadurch gekennzeichnet, daß das furanmodifizierte Phenolharz eine Viskosität von 50 bis 10 000, vorzugsweise 200 bis 2 000 mPa · s/20 °C aufweist.

5. Mischung nach einem oder mehreren der Ansprüche 1 bis 4, dadurch gekennzeichnet, daß das Harz ein Substitutionsprodukt aus Phenol und vinylaromatischen Kohlenwasserstoffen, vorzugsweise Styrol, als Aralkylphenol enthält.

6. Mischung nach einem oder mehreren der Ansprüche 2 bis 5, dadurch gekennzeichnet, daß die Härterkomponente D) eine saure Substanz ist, die in einem Anteil von 0,1 bis 3, vorzugsweise 0,2 bis 2,0 Äquivalent, bezogen auf phenolische OH-Gruppen, vorliegt.

7. Mischung nach einem oder mehreren der Ansprüche 2 bis 6, dadurch gekennzeichnet, daß der Füllstoff C) in Form von Koks, Kunstgraphit, Quarz oder Bariumsulfat vorliegt.

8. Verfahren zur Herstellung von einer Mischung für Kitte nach einem oder mehreren der Ansprüche 2 bis 7, dadurch gekennzeichnet, daß A) Furfurylalkohol mit einem mindestens 0,5 Hydroxymethylgruppen pro phenolisches Hydroxyl enthaltenden Resol auf der Basis a) mindestens eines trifunktionellen Phenols, oder einer Mischung dieses Phenols a) mit b) Alkyl- und/oder Aralkylphenolen, jeweils mit 3 bis 20 C-Atomen im Alkylrest, oder Arylphenol, mit einem Anteil bis zu 60 Mol-% der substituierten Phenole. b), bezogen auf die Summe der Phenole a) und b), bei erhöhter Temperatur umgesetzt, wobei mehr als 0,4 Mol des Furfurylalkohols pro Hydroxymethylgruppe zur Reaktion gebracht werden, das Reaktionsprodukt A) in einem reaktiven Verdünner B) in einem Gewichtsverhältnis zum Harz A) von (0,4 bis 1,5) : 1 gelöst und diese Lösung, vorzugsweise unmittelbar vor ihrer Anwendung, mit einem Füllstoff C) und einem Härter D) vermischt wird, wobei das Gewichtsverhältnis der Komponenten A) und B) zu dem der Komponenten C) und D) 1 : (1 bis 7), vorzugsweise 1 : (1,5 bis 5), beträgt.

9. Verfahren nach Anspruch 8, dadurch gekennzeichnet, daß die Umsetzung von Furfurylalkohol und Resol bei Temperaturen von 100 bis 170 °C, vorzugsweise bis 150 °C vorgenommen wird, und daß die Lösung des Harzes in dem reaktiven Verdünner einen Festharzanteil von 30 bis 80, vorzugsweise 45 bis 65 Gew.-% aufweist.

10. Verfahren nach einem der Ansprüche 8 oder 9, dadurch gekennzeichnet, daß der Füllstoff C) in Form eines Gemisches mit dem Härter D) zugegeben wird.


**Patentansprüche** (für den Vertragsstaat AT)

1. Verfahren zur Herstellung einer säurehärtbaren Mischung für schwindungsarme Kitte auf der Basis eines Reaktionsproduktes von Furfurylalkohol mit einem mindestens 0,5 Hydroxymethylgruppen pro phenolisches Hydroxyl tragenden Resol, dadurch gekennzeichnet, daß A) Furfurylalkohol mit einem Hydroxymethylgruppen enthaltenden Resol auf der Basis a) mindestens eines trifunktionellen Phenols, oder einer Mischung dieses Phenols a) mit b) Alkyl-, Aralkyl- oder Arylphenolen , jeweils mit 3 bis 20 C-Atomen im Alkylrest, oder Arylphenol, mit einem Anteil bis zu 60 Mol-% der substituierten Phenole b), bezogen auf die Summe der Phenole a) und b), wobei pro Hydroxymethylgruppe mehr als 0,4 Mol Furfurylalkohl umgesetzt und das Reaktionsprodukt A) in einem reaktiven Verdünner B) gelöst wird.

2. Verfahren nach Anspruch 1, dadurch gekennzeichnet, daß die Mischung außerdem noch

C) mindestens einen Füllstoff, und

D) mindestens einen Härter enthält, wobei die Lösung, vorzugsweise unmittelbar vor ihrer Anwendung, mit dem Füllstoff C) und dem Härter D) vermischt wird und das Gewichtsverhältnis der Komponenten A) und B) zu dem der Komponenten C) und D) 1 : (1 bis 7), vorzugsweise 1 : (1,5 bis 5), beträgt.

3. Verfahren nach einem der beiden Ansprüche 1 oder 2, gekennzeichnet durch wenigstens eines der Merkmale, daß Alkyl- und/oder Aralkylphenole eingesetzt werden, in denen der Alkylrest 4 bis 12 C-Atome aufweist, daß das trifunktionelle Phenol Phenol selbst ist, daß pro Hydroxymethylgruppe mehr als 0,8 Mol Furfurylalkohol umgesetzt worden sind und daß der reaktive Verdünner eine Furanverbindung, vorzugsweise Furfurylalkohol ist.

4. Verfahren nach einem oder mehreren der Ansprüche 1 bis 3, dadurch gekennzeichnet, daß das furanmodifizierte Phenolharz eine Viskosität von 50 bis 10 000, vorzugsweise 200 bis 2 000 mPa · s/20 °C aufweist.

5. Verfahren nach einem oder mehreren der Ansprüche 1 bis 4, dadurch gekennzeichnet, daß das Harz ein Substitutionsprodukt aus Phenol und vinylaromatischen Kohlenwasserstoffen, vorzugsweise Styrol, als Aralkylphenol enthält.

6. Verfahren nach einem oder mehreren der Ansprüche 2 bis 5, dadurch gekennzeichnet, daß die Härterkomponente D) eine saure Substanz ist, die in einem Anteil von 0,1 bis 3, vorzugsweise 0,2 bis 2,0 Äquivalent, bezogen auf phenolische OH-Gruppen, eingesetzt wird.

7. Verfahren nach einem oder mehreren der Ansprüche 2 bis 6, dadurch gekennzeichnet, daß der Füllstoff C) in Form von Koks, Kunstgraphit, Quarz oder Bariumsulfat eingesetzt wird.

8. Verfahren nach einem oder mehreren der Ansprüche 1-8, dadurch gekennzeichnet, daß die Umsetzung zum Resol bei Temperaturen von 100 bis 170 °C, vorzugsweise bis 150 °C vorgenommen wird, und daß die Lösung des Harzes in dem reaktiven Verdünner einen Festharzanteil von 30 bis 80, vorzugsweise 45 bis 65 Gew.-% aufweist.

9. Verfahren nach einem der Ansprüche 2 bis 8, dadurch gekennzeichnet, daß der Füllstoff C) in Form eines Gemisches mit dem Härter D) zugegeben wird.

10. Verwendung der nach einem oder mehreren der Ansprüche 1 bis 9 hergestellten säurehärtbaren Mischung zur Herstellung von schwindungsarmen Kitten.

**Claims** (for the Contracting States : BE, CH, DE, FR, GB, IT, LI, NL, SE)

1. An acid-curing mixture for low-shrinkage adhesive cements based on a reaction product of furfuryl alcohol with a resol carrying at least 0.5 hydroxymethyl groups per phenolic hydroxyl group, which contains

A) as binder, the reaction product furfuryl alcohol and the resol based on a) at least one trifunctional phenol or a mixture of this phenol a) with b) alkylphenols and/or aralkylphenols having in each case 3 to 20 carbon atoms in the alkyl radical or an arylphenol, the mixture containing up to 60 mole % of the substituted phenols b), based on the sum of the phenols a) and b), more than 0.4 mole of furfuryl alcohol having been reacted per hydroxymethyl group, and

B) at least one reactive diluent in a ratio by weight of (0.4 to 1.5) : 1 to the resin A).

2. A mixture as claimed in claim 1, which also contains, in addition,

C) at least one filler and

D) at least one curing agent, the ratio by weight between the sum of the components A) and B) and that of the components C) and D) being 1 : (1 to 7), preferably 1 : (1.5 to 5).

3. A mixture as claimed in either of claims 1 or 2, having at least one of the characteristics that the alkyl radical in the alkylphenols and/or aralkylphenols has 4 to 12 carbon atoms, that the trifunctional phenol is phenol itself, that more than 0.8 mole of furfuryl alcohol has been reacted per hydroxymethyl group and that the reactive diluent is a furan compound, preferably furfuryl alcohol.

4. A mixture as claimed in one or more of claims 1 to 3, wherein the furan-modified phenolic resin has a viscosity of 50 to 10,000, preferably 200 to 2,000, mPa · s/20 °C.

5. A mixture as claimed in one or more of claims 1 to 4, wherein the resin contains a substitution product formed from phenol and vinyl-aromatic hydrocarbons, preferably styrene, as the aralkylphenol.

6. A mixture as claimed in one or more of claims 2 to 5, wherein the curing component D) is an acid substance, present in a proportion of 0.1 to 3, preferably 0.2 to 2.0, equivalents, based on phenolic OH groups.

7. A mixture as claimed in one or more of claims 2 to 6, wherein the filler C) is present in the form of coke, artificial graphite, quartz or barium sulfate.

8. A process for the preparation of a mixture for adhesive cements as claimed in one or more of claims 2 to 7, which comprises reacting at an elevated temperature A) furfuryl alcohol with a resol containing at least 0.5 hydroxymethyl groups per phenolic hydroxyl group and based on a) at least one trifunctional phenol, or a mixture of this phenol a) with b) alkylphenols and/or aralkylphenols, having in each case 3 to 20 carbon atoms in the alkyl radical, or an arylphenol, the mixture containing up to 60 mole % of the substituted phenols b), based on the sum of the phenols a) and b), more than 0.4 mole of the furfuryl alcohol being reacted per hydroxymethyl group, dissolving the reaction product A) in a reactive diluent B) in a ratio by weight of (0.4 to 1.5) : 1 to the resin A) and mixing this solution, preferably immediately before use, with a filler C) and a curing agent D), the ratio by weight of the components A) and B) to that of the components C) and D) being 1 : (1 to 7), preferably 1 : (1.5 to 5).

9. The process as claimed in claim 8, wherein the reaction of furfuryl alcohol and resol is carried out at temperatures from 100 to 170 °C, preferably up to 150 °C, and the solution of the resin in the reactive diluent has a solid resin content of 30 to 80, preferably 45 to 65, % by weight.

10. The process as claimed in one of claims 8 or 9, wherein the filler C) is added in the form of a mixture with the curing agent D).

**Claims** (for the Contracting State AT)

1. A process for the preparation of an acid-curing mixture for low-shrinkage adhesive cements based on a reaction product of furfuryl alcohol with a resol carrying at least 0.5 hydroxymethyl groups per phenolic hydroxyl group, which comprises reacting A) furfuryl alcohol with a resol containing hydroxymethyl groups and based on a) at least one trifunctional phenol or a mixture of this phenol a) with b), alkylphenols, aralkylphenols or arylphenols, having in each case 3 to 20 carbon atoms in the alkyl radical, or an arylphenol containing up to 60 mole % of the substituted phenols b), based on the sum of the phenols a) and b), more than 0.4 mole of furfuryl alcohol having been reacted per hydroxymethyl group, and dissolving the reaction product A) in a reactive diluent B).

2. The process as claimed in claim 1, wherein the mixture also contains, in addition,
   C) at least one filler and
   D) at least one curing agent,
the solution being mixed, preferably immediately before use, with the filler C) and the curing agent D), and the ratio by weight of the components A) and B) to that of the components C) and D) being 1 : (1 to 7), preferably 1 : (1.5 to 5).

3. The process as claimed in either of claims 1 or 2, having at least one of the characteristics that alkylphenols and/or aralkylphenols in which the alkyl radical has 4 to 12 carbon atoms are employed, that the trifunctional phenol is phenol itself, that more than 0.8 mole of furfuryl alcohol has been reacted per hydroxymethyl group and that the reactive diluent is a furan compound, preferably furfuryl alcohol.

4. The process as claimed in one or more of claims 1 to 3, wherein the furan-modified phenolic resin has a viscosity of 50 to 10,000, preferably 200 to 2,000, mPa · s/20 °C.

5. The process as claimed in one or more of claims 1 to 4, wherein the resin contains a substitution product formed from phenol and vinyl-aromatic hydrocarbons, preferably styrene, as the aralkylphenol.

6. The process as claimed in one or more of claims 2 to 5, wherein the curing component D) is an acid substance, which is employed in a proportion of 0.1 to 3, preferably 0.2 to 2.0, equivalents, based on phenolic OH groups.

7. The process as claimed in one or more of claims 2 to 6, wherein the filler C) is employed in the form of coke, artificial graphite, quartz or barium sulfate.

8. The process as claimed in one or more of claims 1 to 8, wherein the reaction to give the resol is carried out at temperatures from 100 to 170 °C, preferably up to 150 °C, and the solution of the resin in the reactive diluent has a solid resin content of 30 to 80, preferably 45 to 65, % by weight.

9. The process as claimed in one of claims 2 to 8, wherein the filler C) is added in the form of a mixture with the curing agent D).

10. The use of the acid-curing mixture prepared as claimed in one or more of claims 1 to 9, for the preparation of low-shrinkage adhesive cements.

**Revendications** (pour les Etats contractants : BE, CH, DE, FR, GB, IT, LI, NL, SE)

1. Mélange durcissable par des acides pour des ciments à faible retrait à base d'un produit résultant de la réaction de l'alcool furfurylique avec un résol porteur d'au moins 0,5 radical hydroxyméthyle par hydroxy phénolique, mélange caractérisé en ce qu'il contient :

A) comme liant, le produit résultant de la réaction de l'alcool furfurylique et du résol à base a) d'au moins un phénol trifonctionnel ou d'un mélange de ce phénol a) avec b) des alkyl- et/ou aralkyl-phénols dont la partie alkyle contient à chaque fois de 3 à 20 atomes de carbone, ou un arylphénol, la proportion des phénols substitués b) pouvant aller jusqu'à 60 % en moles par rapport à la somme des phénols a) et b), et la proportion de l'alcool furfurylique qui a réagi étant supérieure à 0,4 mol par radical hydroxyméthyle, et

B) au moins un diluant réactif dans un rapport pondéral, par rapport à la résine A), compris entre 0,4 : 1 et 1,5 : 1.

2. Mélange selon la revendication 1 caractérisé en ce qu'il contient en outre :
   C) au moins une charge et
   D) au moins un durcisseur, le rapport pondéral entre la somme des composantes A) et B) et celle des composantes C) et D) étant de 1 : (1 à 7), de préférence de 1 : (1,5 à 5).

3. Mélange selon l'une des revendications 1 et 2, caractérisé en ce qu'il présente au moins une des particularités suivantes : le radical alkyle dans les alkyl- et/ou aralkyl-phénols contient de 4 à 12 atomes de carbone ; le phénol trifonctionnel est le phénol lui-même ; la proportion d'alcool furfurylique qui a réagi est de plus de 0,8 mol par radical hydroxyméthyle ; et le diluant réactif est un dérivé du furanne, de préférence l'alcool furfurylique.

4. Mélange selon l'une quelconque des revendications 1 à 3, caractérisé en ce que la résine phénolique modifiée par le furanne a une viscosité de 50 à 10 000 mPa · s à 20 °C, de préférence de 200 à 2 000.

5. Mélange selon l'une quelconque des revendications 1 à 4, caractérisé en ce que la résine contient, comme aralkyl-phénol, un produit de substitution dérivant du phénol et d'hydrocarbures vinyl-aromatiques, de préférence du styrène.

6. Mélange selon l'une quelconque des revendications 2 à 5, caractérisé en ce que la composante durcisseur D) est une substance acide qui est présente en une proportion de 0,1 à 3, de préférence de 0,2 à 2,0, équivalents par rapport aux radicaux —OH phénoliques.

7. Mélange selon l'une quelconque des revendications 2 à 6, caractérisé en ce que la charge C) est sous la forme de coke, de graphite artificiel, de quartz ou de sulfate de baryum.

8. Procédé pour préparer un mélange pour ciments selon l'une quelconque des revendications 2 à 7, procédé caractérisé en ce qu'on fait réagir à température élevée A) de l'alcool furfurylique avec un résol contenant au moins 0,5 radical hydroxyméthyle par radical hydroxy phénolique, à base a) d'au moins un phénol trifonctionnel, ou d'un mélange de ce phénol a) avec b) des alkyl- et/ou aralkyl-phénols dont la partie alkyle contient à chaque fois de 3 à 20 atomes de carbone, ou un arylphénol, la proportion des phénols substitués b) pouvant aller jusqu'à 60 % en moles par rapport à la somme des phénols a) et b), et la proportion de l'alcool furfurylique mis à réagir étant supérieure à 0,4 mol par radical hydroxyméthyle, on dissout le produit réactionnel A) dans un diluant réactif B) en un rapport pondéral relativement à la résine A) compris entre 0,4 : 1 et 1,5 : 1, et on mélange cette solution, de préférence juste avant de l'utiliser, avec une charge C) et un durcisseur D), le rapport pondéral entre la somme des composantes A) et B) et celle des composantes C) et D) étant compris entre 1 : 1 et 1 : 7, de préférence entre 1 : 1,5 et 1 : 5.

9. Procédé selon la revendication 8, caractérisé en ce que la réaction de l'alcool furfurylique et du résol est effectuée à des températures de 100 à 170 °C, de préférence à au plus 150 °C, et en ce que la solution de la résine dans le diluant réactif a une teneur en résine solide de 30 à 80 % en poids, de préférence de 45 à 65 % en poids.

10. Procédé selon l'une des revendications 8 et 9, caractérisé en ce que la charge C) est ajoutée sous la forme d'un mélange avec le durcisseur D).


**Revendications** (pour l'Etat contractant AT)

1. Procédé de préparation d'un mélange durcissable par des acides pour des ciments à faible retrait à base d'un produit résultant de la réaction de l'alcool furfurylique avec un résol contenant au moins 0,5 radical hydroxyméthyle par radical hydroxy phénolique, procédé caractérisé en ce qu'on fait réagir A) de l'alcool furfurylique avec un résol qui contient des radicaux hydroxyméthyles et qui est à base a) d'au moins un phénol trifonctionnel, ou d'un mélange de ce phénol a) avec b) des alkyl- ou aralkyl-phénols dont la partie alkyle contient à chaque fois de 3 à 20 atomes de carbone, ou des arylphénols, la proportion des phénols substitués b) pouvant aller jusqu'à 60 % en moles par rapport à la somme des phénols a) et b), et la proportion de l'alcool furfurylique qui a réagi étant supérieure à 0,4 mol par radical hydroxyméthyle, et on dissout le produit réactionnel A) dans un diluant réactif B).

2. Procédé selon la revendication 1 caractérisé en ce que le mélange contient en outre :
C) au moins une charge, et
D) au moins un durcisseur,
la solution étant mélangée, de préférence juste avant son emploi, avec la charge C) et le durcisseur D), et le rapport entre le poids des composantes A) et B) et celui des composantes C) et D) étant de 1 : (1 à 7), de préférence de 1 : (1,5 à 5).

3. Procédé selon l'une des revendications 1 et 2, caractérisé en ce qu'il présente au moins une des particularités suivantes : on met en jeu des alkyl- et/ou aralkyl-phénols dans lesquels le radical alkyle contient de 4 à 12 atomes de carbone ; le phénol trifonctionnel est le phénol lui-même ; la proportion de l'alcool furfurylique qui a réagi est supérieure à 0,8 mol par radical hydroxyméthyle ; et le diluant réactif est un dérivé du furanne, de préférence l'alcool furfurylique.

4. Procédé selon l'une quelconque des revendications 1 à 3, caractérisé en ce que la résine phénolique modifiée par le furanne a une viscosité de 50 à 10 000 mPa · s à 20 °C, de préférence de 200 à 2 000.

5. Procédé selon l'une quelconque des revendications 1 à 4, caractérisé en ce que la résine contient, comme aralkyl-phénol, un produit de substitution dérivant du phénol et d'hydrocarbures vinyl-aromatiques, de préférence du styrène.

6. Procédé selon l'une quelconque des revendications 2 à 5, caractérisé en ce que la composante durcisseur D) est une substance acide qui est mise en jeu en une proportion de 0,1 à 3 équivalents, de préférence de 0,2 à 2,0 équivalents, par rapport aux radicaux —OH phénoliques.

7. Procédé selon l'une quelconque des revendications 2 à 6, caractérisé en ce que la charge C) est mise en jeu sous la forme de coke de graphite artificiel, de quartz ou de sulfate de baryum.

8. Procédé selon une ou plusieurs des revendications 1 à 8, caractérisé en ce que la réaction conduisant au résol est effectuée à des températures de 100 à 170 °C, de préférence d'au plus 150 °C, et en ce que la solution de la résine dans le diluant réactif a une teneur en résine solide de 30 à 80 % en poids, de préférence de 45 à 65 % en poids.

9. Procédé selon l'une quelconque des revendications 2 à 8, caractérisé en ce que la charge C) est ajoutée sous la forme d'un mélange avec le durcisseur D).

10. Application du mélange durcissable par des acides qui a été préparé selon une ou plusieurs des revendications 1 à 9 pour la préparation de ciments à faible retrait.